# EUROPEAN PATENT APPLICATION

(11) **EP 4 650 327 A1**
(43) Date of publication of application: **19.11.2025**
(21) Application number: 23925303.2
(22) Date of filing: 02.03.2023
(51) Int. Cl.: C02F 1/48

(54) **ION REMOVAL APPARATUS**

(71) Applicant: MITSUBISHI ELECTRIC CORPORATION, Chiyoda-ku Tokyo 100-8310 (JP)
(72) Inventor: NAKAYAMA, Yoshihiro, Tokyo 100-8310 (JP); KURIHARA, Kota, Tokyo 100-8310 (JP); IMAMURA, Eiji, Tokyo 100-8310 (JP); TACHIBANA, Nobuhiro, Tokyo 100-8310 (JP); TAKADA, Masaru, Tokyo 100-8310 (JP)
(74) Representative: Meissner Bolte Partnerschaft mbB
(86) International application number: PCT/JP2023/007706
(87) International publication number: WO 2024/180748

(57) **Abstract**

An ion removal device includes: a container part; a first electrode configured to adsorb ions in liquid; a first electrode guide including a first electrode holding part and a first electrode guide inflow port, the first electrode holding part being configured to hold the first electrode, the liquid being caused to flow into the first electrode holding part through the first electrode guide inflow port; a second electrode configured to adsorb ions in the liquid; a second electrode guide including a second electrode holding part and a second electrode guide outflow port, the second electrode holding part being configured to hold the second electrode, the liquid being caused to flow out from the second electrode holding part through the second electrode guide outflow port; and a separator having electrical insulating property and liquid permeability that allows the liquid to permeate through the separator, the separator being disposed between the first electrode and the second electrode. In the container part, the first electrode guide, the separator, and the second electrode guide are disposed such that the liquid to be treated passes through the first electrode guide, the separator, and the second electrode guide in this order.

## Description

### Technical Field

The present invention relates to an ion removal device.

### Background Art

Conventionally, there are known ion removal devices that remove ionic substances by performing a desalination treatment on liquid, such as water. Patent Literature 1, for example, discloses a deionizing device that uses the principle of an electric double layer capacitor. This electric double layer capacitor has a configuration in which, in a state in which spacers are interposed between two separators to ensure a flow passage, gaskets, each housing an electrode therein, are disposed on both sides of the separators, and side plates are attached to the outer side of the electrodes, a collector electrode being housed in each side plate. An inflow port and an outflow port for liquid to be treated are formed to allow communication from the outside of the side plate to the spacer disposed on the inner side of the side plate. From liquid that flows into the capacitor from the inflow port, ions are removed in the process of passing through the flow passage formed by the spacers, and the liquid is then caused to flow out to the outside of the capacitor from the outflow port.

### Citation List

### Patent Literature

Patent Literature 1: Japanese Unexamined Patent Application Publication JP 2012 - 086 189 A

### Summary of the Invention

### Technical Problem

However, in the deionizing device disclosed in Patent Literature 1, there is a possibility that, of water to be treated being liquid that passes through the spacers, a portion of the water to be treated merely passes through the spacers without coming into contact with the electrodes and without being treated, leading to a reduction in ion removal performance.

The present invention has been made to solve the above-mentioned problem, and it is an object of the present invention to provide an ion removal device that can enhance ion removal performance by reducing the amount of water to be treated not coming into contact with the electrodes.

### Solution to the Problem

An ion removal device according to an embodiment of the present invention is an ion removal device that performs a desalination treatment on liquid, the ion removal device including: a container part; a first electrode configured to adsorb ions in the liquid; a first electrode guide including a first electrode holding part and a first electrode guide inflow port, the first electrode holding part being configured to hold the first electrode, the liquid being caused to flow into the first electrode holding part through the first electrode guide inflow port; a second electrode configured to adsorb ions in the liquid; a second electrode guide including a second electrode holding part and a second electrode guide outflow port, the second electrode holding part being configured to hold the second electrode, the liquid being caused to flow out from the second electrode holding part through the second electrode guide outflow port; and a separator having electrical insulating property and liquid permeability that allows the liquid to permeate through the separator, the separator being disposed between the first electrode and the second electrode, wherein in the container part, the first electrode guide, the separator, and the second electrode guide are disposed such that the liquid to be treated passes through the first electrode guide, the separator, and the second electrode guide in this order.

### Advantageous Effects of the Invention

According to the embodiment of the present invention, the first electrode guide, the separator, and the second electrode guide are disposed in the container part such that liquid to be treated passes through the first electrode guide, the separator, and the second electrode guide in this order. Accordingly, it is possible to reduce the amount of water to be treated not coming into contact with the electrodes and hence, ion removal performance can be enhanced.

### Brief Description of Drawings

- FIG. 1: is perspective view showing an ion removal device according to Embodiment 1 in an exploded manner.
- FIG. 2: is a longitudinal cross-sectional view showing the ion removal device according to Embodiment 1.
- FIG. 3: is a perspective view showing a lid of the ion removal device according to Embodiment 1, as viewed from below.
- FIG. 4: is a longitudinal cross-sectional view showing an ion removal device according to Embodiment 2.
- FIG. 5: is a transverse cross-sectional view showing a first electrode guide of the ion removal device according to Embodiment 2.
- FIG. 6: is a transverse cross-sectional view showing a second electrode guide of the ion removal device according to Embodiment 2.
- FIG. 7: is a plan view showing a third current collector of the ion removal device according to Embodiment 2.

### Description of Embodiments

Hereinafter, ion removal devices according to Embodiments will be described with reference to drawings and the like. In the following drawings, components given the same reference symbols are identical or corresponding components, and the same applies for the entire Embodiments described below. In addition, the relationship of sizes of the respective components in the drawings may differ from that of the actual ones. Modes of constitutional elements shown in entire description are merely given for the sake of example, and are not limited to the modes described in description. There may be cases in which not all equipment described in description is necessary.

In particular, the combination of the constitutional elements or the like is not limited to only the combination given in each Embodiment, and constitutional elements described in one embodiment may be used in other Embodiments. Hereinafter, "water" being the liquid that is the target of the treatment performed by the device refers to, without making a distinction, raw water before treatment is performed in an ion removing step, water on which the treatment is performed in the ion removing step, or regenerated waste water having an increased ion concentration due to a treatment in an ion desorption step performed after ions are removed.

### Embodiment 1.

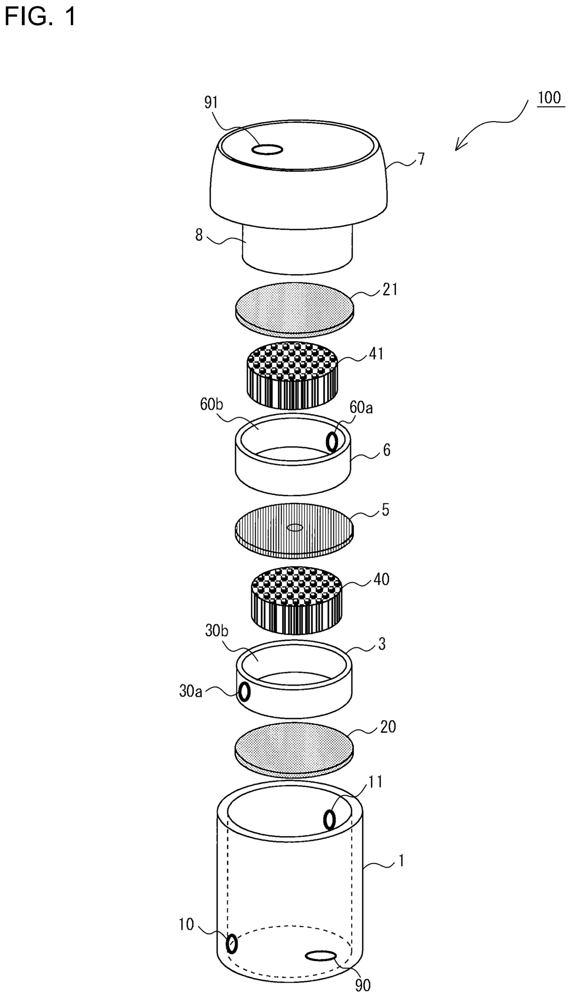

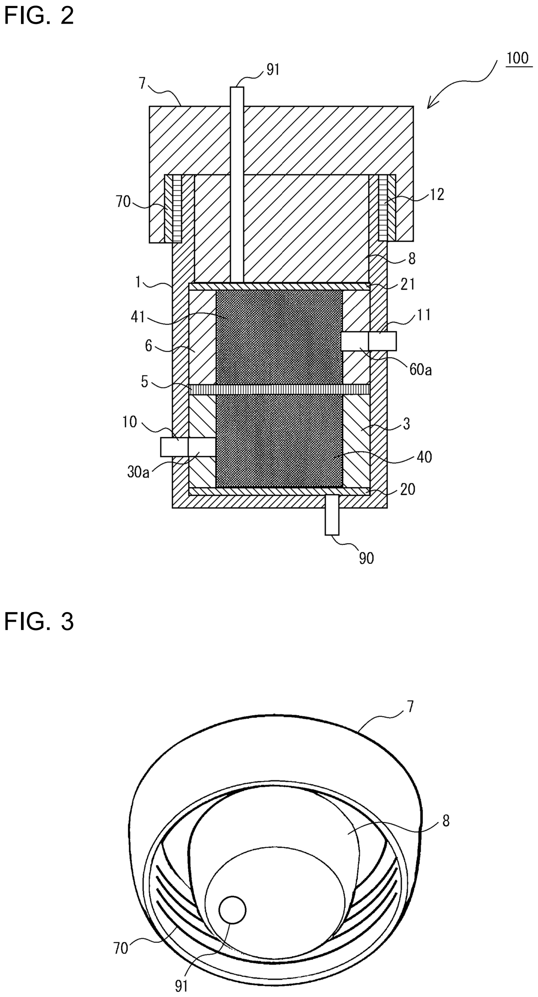

FIG. 1 is a perspective view showing an ion removal device 100 according to Embodiment 1 in an exploded manner. FIG. 2 is a longitudinal cross-sectional view showing the ion removal device 100 according to Embodiment 1. FIG. 3 is a perspective view showing a lid 7 of the ion removal device 100 according to Embodiment 1, as viewed from below.

The ion removal device 100 according to Embodiment 1 performs a desalination treatment on liquid, such as water. As shown in FIG. 1 and FIG. 2, the ion removal device 100 includes a container part 1, a first current collector 20, a first electrode guide 3, a first electrode 40, a separator 5, a second electrode guide 6, a second electrode 41, a second current collector 21, the lid 7, a pushing part 8, a first terminal part 90, and a second terminal part 91. The first current collector 20, the first electrode guide 3, the separator 5, the second electrode guide 6, and the second current collector 21 are laminated in this order from the bottom in the container part 1, and the lid 7 is disposed on the container part 1. The pushing part 8 is disposed between the second current collector 21 and the lid 7. The ion removal device 100 removes ions dissolved in water by causing the first electrode 40 and the second electrode 41 to adsorb the ions, the first electrode 40 being held by the first electrode guide 3, the second electrode 41 being held by the second electrode guide 6.

The container part 1 has an opening port formed at one end side thereof, thus having a bottomed cylindrical shape. The lid 7 is attached to the opening port of the container part 1. A container-part inflow port 10 and a container-part outflow port 11 are provided in the cylindrical surface of the container part 1, liquid being caused to flow into the container part 1 from the outside through the container-part inflow port 10, the liquid being caused to flow out from the inside of the container part 1 to the outside through the container-part outflow port 11. The container-part inflow port 10 is provided at the lower part of the cylindrical surface.

The container-part outflow port 11 is provided at the upper part of the cylindrical surface. For example, the container-part inflow port 10 and the container-part outflow port 11 are provided at positions that face each other in the radial direction when the container part 1 is viewed in plan view. Any material may be used for the container part 1 provided that the container part 1 has a cylindrical shape. As shown in FIG. 2, a first threaded part 12 is formed on the outer peripheral surface of the upper end part of the container part 1 to allow coupling of the lid 7.

The first current collector 20 has a disk shape, and is in contact with the first electrode 40. The first terminal part 90 is connected to an external power supply (not shown in the drawing) on the outside of the container part 1, and is connected to the first current collector 20 on the inside of the container part 1. That is, the first current collector 20 is connected to the external power supply (not shown in the drawing) via the first terminal part 90, and electricity is supplied to the first current collector 20 from the first terminal part 90. In an ion removing step performed by the ion removal device 100, the first current collector 20 transfers electricity to the first electrode 40, which is held by the first electrode guide 3, to supply charges. In an ion desorption step performed by the ion removal device 100, the first current collector 20 collects electricity during discharge from the first electrode 40.

A graphite sheet, Grafoil, conductive rubber, or a metal sheet or plate that is sandwiched or covered by these materials, for example, is used as a material for forming the first current collector 20. As described above, the first current collector 20 is made of a material having conductivity and flexibility. It is sufficient for the first terminal part 90 to be directly or indirectly connected to the first current collector 20, and a plate or a wire made of a conductive material may be disposed between the first terminal part 90 and the first current collector 20. The first terminal part 90 is disposed such that a portion of the first terminal part 90 is disposed outside the container part 1 or the lid 7, and another portion of the first terminal part 90 is disposed inside the container part 1 or the lid 7. In the case of FIG. 2, the first terminal part 90 is provided to penetrate through the bottom surface of the container part 1. The ion removal device 100 achieves application of electricity to the first electrode 40 and discharge from the first electrode 40 by the first terminal part 90.

The first electrode guide 3 has a cylindrical shape. The first electrode guide 3 includes a first electrode holding part 30b and a first electrode guide inflow port 30a. The first electrode holding part 30b is a portion surrounded by the inner peripheral surface of a cylinder, and the first electrode 40 is disposed at the first electrode holding part 30b. The first electrode guide inflow port 30a is an opening port that is formed in the surface of the cylinder in a penetrating manner to form a flow passage through which liquid is caused to flow into the first electrode holding part 30b. The first electrode guide inflow port 30a may be provided with an outflow prevention part that prevents outflow of the first electrode 40 disposed at the first electrode holding part 30b.

The outflow prevention part is a part made of a resin net having insulating property, a sponge filter, a metal net to which insulating coating is applied, a non-woven fabric, a filter paper, or the like. It is sufficient for the first electrode guide 3 to be able to be disposed in the container part 1 having a cylindrical shape, and the outer edge part and the inner edge part of the first electrode guide 3 may have different shapes. The material of the first electrode guide 3 is a material having insulating property, and is a resin or rubber, for example. A sealing part, such as a packing or an O-ring, may be installed between the first electrode guide 3 and the first current collector 20, the separator 5, or the second electrode guide 6, each being installed adjacent to the first electrode guide 3. In this case, a groove or the like for the installation of the sealing part may be formed on the first electrode guide 3.

The separator 5 has a disk shape. The separator 5 prevents a short circuit between the first electrode 40 and the second electrode 41, the first electrode 40 being held by the first electrode guide 3, the second electrode 41 being held by the second electrode guide 6. A material for forming the separator 5 is, for example, a filter paper, a filter, a porous film, a non-woven fabric, or a foaming agent. These materials are materials having electrical insulating property and liquid permeability that prevents conductive materials from passing through the materials, but allows liquid to permeate through the materials.

The second electrode guide 6 has a cylindrical shape. The second electrode guide 6 includes a second electrode holding part 60b and a second electrode guide outflow port 60a. The second electrode holding part 60b is a portion surrounded by the inner peripheral surface of a cylinder, and the second electrode 41 is disposed at the second electrode holding part 60b. The second electrode guide outflow port 60a is an opening port that is formed in the surface of the cylinder in a penetrating manner to form a flow passage through which the liquid is caused to flow out from the second electrode holding part 60b. The second electrode guide outflow port 60a may be provided with an outflow prevention part that prevents outflow of the second electrode 41 disposed at the second electrode holding part 60b. The outflow prevention part is a part that is made of a resin net having insulating property, a sponge filter, a metal net to which insulating coating is applied, a non-woven fabric, a filter paper, or the like.

In the same manner as the first electrode guide 3, it is sufficient for the second electrode guide 6 to be able to be disposed in the container part 1 having a cylindrical shape, and the outer edge part and the inner edge part of the second electrode guide 6 may have different shapes. The material of the second electrode guide 6 is a material having insulating property, and is a resin or rubber, for example. A sealing part, such as a packing or an O-ring, may be installed between the second electrode guide 6 and the second current collector 21, the separator 5, or the first electrode guide 3, each being installed adjacent to the second electrode guide 6. In this case, a groove or the like for the installation of the sealing part may be formed on the second electrode guide 6.

The second current collector 21 has a disk shape, and is in contact with the second electrode 41. The second terminal part 91 is connected to an external power supply (not shown in the drawing) on the outside of the container part 1, and is connected to the second current collector 21 on the inside of the container part 1. That is, the second current collector 21 is connected to the external power supply (not shown in the drawing) via the second terminal part 91, and electricity is supplied to the second current collector 21 from the second terminal part 91. In the ion removing step performed by the ion removal device 100, the second current collector 21 transfers electricity to the second electrode 41, which is held by the second electrode guide 6, to supply charges. In the ion desorption step performed by the ion removal device 100, the second current collector 21 collects electricity during discharge from the second electrode 41.

A graphite sheet, Grafoil, conductive rubber, or a metal sheet or plate that is sandwiched or covered by these materials, for example, is used as a material for forming the second current collector 21. As described above, the second current collector 21 is made of a material having conductivity and flexibility. It is sufficient for the second terminal part 91 to be directly or indirectly connected to the second current collector 21, and a plate or a wire made of a conductive material may be disposed between the second terminal part 91 and the second current collector 21. The second terminal part 91 is disposed such that a portion of the second terminal part 91 is disposed outside the container part 1 or the lid 7, and another portion of the second terminal part 91 is disposed inside the container part 1 or the lid 7. In the case of FIG. 2, the second terminal part 91 is provided to penetrate through the lid 7 and the pushing part 8. The ion removal device 100 achieves application of electricity to the second electrode 41 and discharge from the second electrode 41 by the second terminal part 91.

In the ion removing step, the first electrode 40 and the second electrode 41 receive a supply of charges due to electric power supplied from the power supply, thus adsorbing ions in water and, in the ion desorption step, the first electrode 40 and the second electrode 41 release the adsorbed ions. The first electrode 40 is positively or negatively charged due to the supply of charges. In contrast, the second electrode 41 is charged with a polarity opposite to the polarity of the first electrode 40. The electrode that is charged with a positive polarity adsorbs anions. Ions charged with a negative polarity adsorb cations. That is, each of the first electrode 40 and the second electrode 41 adsorbs ions having a polarity opposite to the polarity of the electrode. To increase the capacity as a capacitor, for each of the first electrode 40 and the second electrode 41, for example, a conductive material being a substance having conductivity and a large specific surface area is used, such as activated carbon, porous carbon, porous conductive beads, or porous metal. The form of the conductive material may be a powder form, a granular form, a fibrous form, or the like. In the case of a powdery granular conductive material, the outer diameter of the conductive material is 100 nm to 10 mm. In the case of a fibrous conductive material, the thickness of the conductive material is 1 µm to 50 µm. There may be cases in which cloth, filters, or the like made of these conductive materials are used as the first electrode 40 and the second electrode 41.

The lid 7 has a recessed shape, and is attached to the upper end part of the container part 1 to close the opening port of the container part 1. As shown in FIG. 2 and FIG. 3, a second threaded part 70 is formed on the inner peripheral surface of the lid 7, and is coupled to the first threaded part 12 of the container part 1. When the upper part of the container part 1 is fitted into the recessed part of the lid 7, and when the second threaded part 70 is screwed onto and coupled to the first threaded part 12, the lid 7 is attached to the container part 1 as shown in FIG. 2. A sealing part, such as a packing or an O-ring, may be installed between the lid 7 and the container part 1. In this case, a groove or the like for installing the sealing part may be formed on the lid 7 or the container part 1.

The pushing part 8 is also provided to the lid 7, the pushing part 8 protruding from the inner bottom surface of the recessed part toward the inside of a cylinder of the container part 1, and being fitted into the cylinder of the container part 1 from the upper end of the container part 1. For example, the pushing part 8 is configured to be integrally formed with the lid 7. By forming the pushing part 8 integrally with the lid 7, the ion removal device 100 can be easily assembled. However, the pushing part 8 may be formed as a separate part from the lid 7. The pushing part 8 pushes the first electrode 40 and the second electrode 41, which are housed in the container part 1, due to the coupling of the lid 7 and the container part 1.

Consequently, the contact area and the contact point between the first electrode 40 and the first current collector 20, and the contact area and the contact point between the second electrode 41 and the second current collector 21 are increased, and electric resistance of the ion removal device 100 is reduced and hence, ion removal efficiency of the ion removal device 100 is enhanced. In the case in which a powdery conductive material, a granular conductive material, or a fibrous conductive material is used for the first electrode 40 and the second electrode 41, the contact area and the contact point between the components of the first electrode 40, and the contact area and the contact point between the components of the second electrode 41 are increased, and the electric resistance of the first electrode 40 and the second electrode 41 is reduced and hence, ion removal efficiency is enhanced.

A sealing part, such as a packing or an O-ring, may be installed between the pushing part 8 and the second current collector 21. In this case, a groove or the like for installing the sealing part may be formed on the pushing part 8 or the second current collector 21. The sealing part is installed at a position that does not prevent contact between the second terminal part 91 and the second current collector 21. In the case in which the pushing part 8 and the lid 7 are not formed as an integral body, a sealing part, such as a packing or an O-ring, may be installed between the pushing part 8 and the lid 7. In this case, a groove or the like for installing the sealing part may be formed on the pushing part 8 or the lid 7.

The ion removal device 100 is configured such that, after the lid 7 is attached to the container part 1, and the parts in the container part 1 are push by the pushing part 8, the positions of the container-part inflow port 10 and the first electrode guide inflow port 30a are aligned with each other, and the positions of the container-part outflow port 11 and the second electrode guide outflow port 60a are aligned with each other. Consequently, the flow passage for liquid is formed in the ion removal device 100 by the container part 1, the first electrode guide 3, the first electrode 40, the separator 5, the second electrode 41, and the second electrode guide 6.

Liquid flows into the container part 1 from the container-part inflow port 10, passes through the first electrode guide inflow port 30a, and flows into the first electrode 40. After the liquid reaches the first electrode 40, the liquid passes through the separator 5, and then reaches the second electrode 41. After the liquid reaches the second electrode 41, the liquid passes through the second electrode guide outflow port 60a and the container-part outflow port 11, and then flows out to the outside of the container part 1. Consequently, the liquid comes into contact with both electrodes and hence, it is possible to prevent a reduction in ion removal performance of the ion removal device 100.

As described above, the ion removal devices 100 and 200 according to Embodiment 1 include: the container part 1 configured to form the outer shell; the first electrode 40 configured to adsorb ions in the liquid; the first electrode guide 3 including the first electrode holding part 30b and the first electrode guide inflow port 30a, the first electrode holding part 30b being configured to hold the first electrode 40, the liquid flowing into the first electrode holding part 30b through the first electrode guide inflow port 30a; the second electrode 41 configured to adsorb ions in the liquid; the second electrode guide 6 including the second electrode holding part 60b and the second electrode guide outflow port 60a, the second electrode holding part 60b being configured to hold the second electrode 41, the liquid flowing out from the second electrode holding part 60b through the second electrode guide outflow port 60a; and the separator 5 disposed between the first electrode 40 and the second electrode 41. In the container part 1, the first electrode guide 3, the separator 5, and the second electrode guide 6 are disposed such that the liquid to be treated passes through the first electrode guide 3, the separator 5, and the second electrode guide 6 in this order.

In other words, according to the ion removal device 100 of Embodiment 1, the liquid to be treated passes through the first electrode 40, the separator 5, and the second electrode 41 in this order in the ion removal device 100 and hence, it is possible to cause the liquid passing through the container part 1 to come into contact with the first electrode 40 and the second electrode 41. Consequently, ion removal performance of the ion removal device 100 can be enhanced. In addition, the container part 1 has a cylindrical shape and hence, when the lid 7 is installed, and when the components in the container part 1 are pushed by the pushing part 8, it is possible to suppress deformation, such as deflection, of the lid 7 and the container part 1. Further, the second threaded part 70 is provided to the lid 7, and the first threaded part 12 is provided to the container part 1 and hence, by screwing the second threaded part 70 to the first threaded part 12, the container part 1 and the lid 7 are coupled to each other, and the inside of the container part 1 can be pushed by the pushing part 8. Accordingly, the ion removal device 100 can be easily assembled.

In the ion removal device 100 according to Embodiment 1, the pushing part 8 is disposed between the lid 7 and the second current collector 21. However, the pushing part 8 may be disposed between the first current collector 20 and the container part 1. In this case, the first terminal part 90 may be disposed to penetrate through the pushing part 8. In addition, a sealing part, such as a packing or an O-ring, may be installed between the pushing part 8 and the container part 1. In this case, a groove or the like for installing the sealing part may be formed on the pushing part 8 or the container part 1. Further, a sealing part, such as a packing or an O-ring, may be installed between the pushing part 8 and the first current collector 20. In this case, a groove or the like for installing the sealing part may be formed on the pushing part 8 or the first current collector 20. In the case in which the sealing part is installed, the sealing part is installed at a position that does not prevent contact between the first terminal part 90 and the first current collector 20.

In the ion removal device 100 according to Embodiment 1, the container-part inflow port 10 and the container-part outflow port 11 are provided at positions that face each other in the radial direction when the container part 1 is viewed in plan view. However, the container-part inflow port 10 and the container-part outflow port 11 may be provided at different positions that do not face each other in the radial direction. Further, the configuration of the ion removal device 100 according to Embodiment 1 is shown, in which the container-part inflow port 10 and the container-part outflow port 11 are provided in the side surface of the container part 1. However, the container-part inflow port 10 or the container-part outflow port 11 may be provided in the lid 7 or the bottom surface of the container part 1, being a surface that faces the lid 7. In the case in which the container-part inflow port 10 or the container-part outflow port 11 is provided in the lid 7 or the bottom surface of the container part 1, it is necessary to provide holes in the first current collector 20 and the second current collector 21, liquid being caused to pass through the holes.

In the case in which the holes through which the liquid is caused to pass are provided in the first current collector 20 and the second current collector 21, an outflow prevention part that prevents outflow of the first electrode 40 and an outflow prevention part that prevents outflow of the second electrode 41 may be provided. In the case in which the container-part inflow port 10 or the container-part outflow port 11 is provided in the lid 7 or the bottom surface of the container part 1, and the holes through which the liquid is caused to pass are provided in the first current collector 20 and the second current collector 21, the first terminal part 90 and the second terminal part 91 are disposed at positions different from the positions of these holes.

In Embodiment 1, the first terminal part 90 and the second terminal part 91 are disposed in the bottom surface of the container part 1 and the lid 7. However, the first terminal part 90 and the second terminal part 91 may be disposed in the side surface or the like of the container part 1. In this case, to prevent leakage of water from a gap formed between the first terminal part 90 and the part through which the first terminal part 90 penetrates, and from a gap formed between the second terminal part 91 and the part through which the second terminal part 91 penetrates, sealing parts or the like may be suitably disposed.

### Embodiment 2.

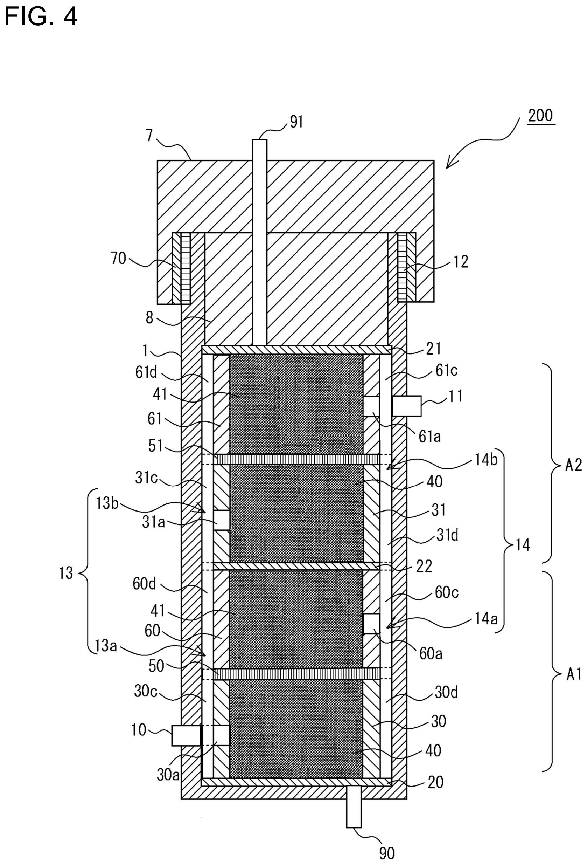

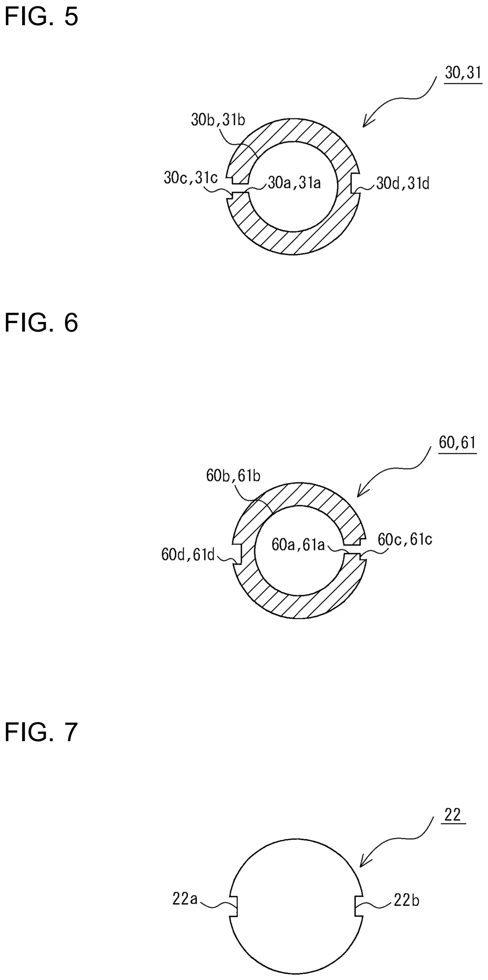

Next, an ion removal device 200 according to Embodiment 2 will be described with reference to FIG. 4 to FIG. 7. FIG. 4 is a longitudinal cross-sectional view showing the ion removal device 200 according to Embodiment 2. FIG. 5 is a transverse cross-sectional view showing a first electrode guide 30 and 31 of the ion removal device 200 according to Embodiment 2. FIG. 6 is a transverse cross-sectional view showing a second electrode guide 60 and 61 of the ion removal device 200 according to Embodiment 2. FIG. 7 is a plan view showing a third current collector 22 of the ion removal device 200 according to Embodiment 2. Constitutional elements identical to the corresponding constitutional elements of the ion removal device 100 described in Embodiment 1 are given the same reference symbols, and the description of such constitutional elements will be omitted when appropriate.

As shown in FIG. 4, the ion removal device 200 according to Embodiment 2 has a configuration in which each of one electrode layer A1 and one electrode layer A2 includes a first electrode 40, a first electrode guide 3, a second electrode 41, a second electrode guide 6, and a separator 5, and two electrode layers A1 and A2 are provided in a laminated manner in a container part 1. A third current collector 22 is disposed between the electrode layers A1 and A2 that are disposed adjacent to each other in the up-and-down direction.

In other words, as shown in FIG. 4, the ion removal device 200 according to Embodiment 2 has a configuration in which a first current collector 20, the first electrode guide 30, a first separator 50, the second electrode guide 60, the third current collector 22, the first electrode guide 31, a second separator 51, the second electrode guide 61, and a second current collector 21 are laminated in this order in the container part 1. A portion disposed between the first current collector 20 and the third current collector 22 is the first electrode layer A1, and a portion disposed between the third current collector 22 and the second current collector 21 is the second electrode layer A2.

The first electrode guide 30 and the first electrode guide 31 have the same configuration. The second electrode guide 60 and the second electrode guide 61 have the same configuration. For the sake of convenience of description, different reference symbols are given to the first electrode guide 30 and the first electrode guide 31 to differentiate these components from each other, and different reference symbols are given to the second electrode guide 60 the second electrode guide 61 to differentiate these components from each other, the first electrode guide 30 and the second electrode guide 60 being located at the lower part, the first electrode guide 31 and the second electrode guide 61 being located at the upper part.

As shown in FIG. 4 and FIG. 5, the first electrode guide 30 has a cylindrical shape. The first electrode guide 30 includes a first electrode guide inflow port 30a, a first electrode holding part 30b, a first-electrode-guide-inflow-water-passage groove 30c, and a first-electrode-guide-water-passage groove 30d. The first electrode guide inflow port 30a is an opening port that is formed in the surface of a cylinder in a penetrating manner to form a flow passage through which liquid flows into the first electrode holding part 30b.

The first electrode holding part 30b is a portion surrounded by the inner peripheral surface of the cylinder, and the first electrode 40 is disposed at the first electrode holding part 30b. The first-electrode-guide-inflow-water-passage groove 30c is a groove formed by recessing a portion of the outer side surface of the first electrode guide 30 along the direction of the hole axis. The first-electrode-guide-inflow-water-passage groove 30c is formed to extend from the upper end surface to the lower end surface of the first electrode guide 30. The first-electrode-guide-inflow-water-passage groove 30c partially or wholly penetrates through the first electrode guide inflow port 30a to form an inflow water passage 13 that communicates with the first electrode 40.

That is, liquid that flows into the first-electrode-guide-inflow-water-passage groove 30c passes through the first electrode guide inflow port 30a, and then flows into the first electrode 40. The first-electrode-guide-water-passage groove 30d is a groove formed by recessing a portion of the outer side surface of the first electrode guide 30 along the direction of the hole axis. The first-electrode-guide-water-passage groove 30d is formed to extend from the upper end surface to the lower end surface of the first electrode guide 30. The first-electrode-guide-water-passage groove 30d is provided at a position different from the position of the first-electrode-guide-inflow-water-passage groove 30c. The first-electrode-guide-water-passage groove 30d is connected to a second-electrode-guide-outflow-water-passage groove 60c to form an outflow water passage 14a. As shown in FIG. 5, the first-electrode-guide-water-passage groove 30d may be provided at a position that faces the first-electrode-guide-inflow-water-passage groove 30c in the radial direction when the first electrode guide 30 is viewed in plan view, or the first-electrode-guide-water-passage groove 30d may be provided at other positions.

The first electrode guide 31 includes a first electrode guide inflow port 31a, a first electrode holding part 31b, a first-electrode-guide-inflow-water-passage groove 31c, and a first-electrode-guide-water-passage groove 31d. The respective constitutional elements of the first electrode guide 31 are identical to the respective corresponding constitutional elements of the first electrode guide 30 and hence, the repeated description of such elements will be omitted.

The first-electrode-guide-inflow-water-passage groove 30c is provided between the first current collector 20 and the first separator 50. The first-electrode-guide-inflow-water-passage groove 31c is provided between the third current collector 22 and the second separator 51. The first-electrode-guide-water-passage groove 30d is provided between the first current collector 20 and the first separator 50. The first-electrode-guide-water-passage groove 31d is provided between the third current collector 22 and the second separator 51.

As shown in FIG. 4 and FIG. 6, the second electrode guide 60 has a cylindrical shape. The second electrode guide 60 includes a second electrode guide outflow port 60a, a second electrode holding part 60b, the second-electrode-guide-outflow-water-passage groove 60c, and a second-electrode-guide-water-passage groove 60d. The second electrode guide outflow port 60a is an opening port that is formed in the surface of a cylinder in a penetrating manner to form a flow passage through which the liquid flows out. The second electrode holding part 60b is a portion surrounded by the inner peripheral surface of the cylinder, and the second electrode 41 is disposed at the second electrode holding part 60b.

The second-electrode-guide-outflow-water-passage groove 60c is a groove formed by recessing a portion of the outer side surface of the second electrode guide 60 along the direction of the hole axis. The second-electrode-guide-outflow-water-passage groove 60c is formed to extend from the upper end surface to the lower end surface of the second electrode guide 60. The second-electrode-guide-outflow-water-passage groove 60c partially or wholly penetrates through the second electrode guide outflow port 60a to form the outflow water passage 14a that communicates with the second electrode 41. That is, the liquid that flows from the first separator 50 flows into the second electrode 41, which is disposed at the second electrode holding part 60b, and the liquid then flows out from the second electrode guide outflow port 60a. The second-electrode-guide-water-passage groove 60d is a groove formed by recessing a portion of the outer side surface of the second electrode guide 60 along the direction of the hole axis. The second-electrode-guide-water-passage groove 60d is formed to extend from the upper end surface to the lower end surface of the second electrode guide 60. The second-electrode-guide-water-passage groove 60d is provided at a position different from the position of the second-electrode-guide-outflow-water-passage groove 60c. The second-electrode-guide-water-passage groove 60d is connected to the first-electrode-guide-inflow-water-passage groove 30c to form an inflow water passage 13a. As shown in FIG. 6, the second-electrode-guide-water-passage groove 60d may be provided at a position that faces the second-electrode-guide-outflow-water-passage groove 60c in the radial direction when the second electrode guide 60 is viewed in plan view, or the second-electrode-guide-water-passage groove 60d may be provided at other positions.

The second electrode guide 61 includes a second electrode guide outflow port 61a, a second electrode holding part 61b, a second-electrode-guide-outflow-water-passage groove 61c, and a second-electrode-guide-water-passage groove 61d. The respective constitutional elements of the second electrode guide 61 are identical to the respective corresponding constitutional elements of the second electrode guide 61 and hence, the repeated description of such elements will be omitted.

The second-electrode-guide-outflow-water-passage groove 60c is provided between the first separator 50 and the third current collector 22. The second-electrode-guide-outflow-water-passage groove 61c is provided between the second separator 51 and the second current collector 21. The second-electrode-guide-water-passage groove 60d is provided between the first separator 50 and the third current collector 22. The second-electrode-guide-water-passage groove 61d is provided between the second separator 51 and the second current collector 21.

As shown in FIG. 4, the third current collector 22 is installed between the second electrode guide 60, which is disposed at the lower part, and the first electrode guide 31, which is disposed at the upper part, and the third current collector 22 is in contact with the first electrode 40 and the second electrode 41. As shown in FIG. 7, an inflow-side water passage 22a and an outflow-side water passage 22b are formed on the third current collector 22. The inflow-side water passage 22a is formed at a position that is aligned with the position of the second-electrode-guide-water-passage groove 60d and the first-electrode-guide-inflow-water-passage groove 31c, and the inflow-side water passage 22a causes the inflow water passage 13a of one electrode layer A1 to communicate with an inflow water passage 13b of the other electrode layer A2. The outflow-side water passage 22b is formed at a position that is aligned with the position of the second-electrode-guide-outflow-water-passage groove 60c and the first-electrode-guide-water-passage groove 31d, and the outflow-side water passage 22b causes the outflow water passage 14a of the one electrode layer A1 to communicate with an outflow water passage 14b of the other electrode layer A2.

In the ion removal device 200 according to Embodiment 2, the first-electrode-guide-inflow-water-passage grooves 30c and 31c and the second-electrode-guide-water-passage grooves 60d and 61d are disposed such that the position of the first-electrode-guide-inflow-water-passage grooves 30c and 31c is aligned with the position of the second-electrode-guide-water-passage grooves 60d and 61d. Consequently, the first-electrode-guide-inflow-water-passage groove 30c, the second-electrode-guide-water-passage groove 60d, the inflow-side water passage 22a, the first-electrode-guide-inflow-water-passage groove 31c, and the second-electrode-guide-water-passage groove 61d are aligned with each other, so that the inflow water passage 13 for liquid is formed in the container part 1, the inflow water passage 13a of the inflow water passage 13 in the electrode layer A1 communicating with the inflow water passage 13b of the inflow water passage 13 in the electrode layer A2.

In the ion removal device 200 according to Embodiment 2, the first-electrode-guide-water-passage grooves 30d and 31d and the second-electrode-guide-outflow-water-passage grooves 60c and 61c are disposed such that the position of the first-electrode-guide-water-passage grooves 30d and 31d is aligned with the position of the second-electrode-guide-outflow-water-passage grooves 60c and 61c. Consequently, the first-electrode-guide-water-passage groove 30d, the second-electrode-guide-outflow-water-passage groove 60c, the outflow-side water passage 22b, the first-electrode-guide-water-passage groove 31d, and the second-electrode-guide-outflow-water-passage groove 61c are aligned with each other, so that an outflow water passage 14 for liquid is formed in the container part 1, the outflow water passage 14a of the outflow water passage 14 in the electrode layer A1 communicating with the outflow water passage 14b of the outflow water passage 14 in the electrode layer A2.

Next, the flow of liquid in the ion removal device 200 according to Embodiment 2 will be described. In the ion removal device 200 according to Embodiment 2, a flow passage for liquid is formed by the container part 1, the first current collector 20, the first electrode guide 30, the first electrode 40, the first separator 50, the second electrode 41, the second electrode guide 60, the third current collector 22, the first electrode guide 31, the first electrode 40, the second separator 51, the second electrode 41, the second electrode guide 61, and the second current collector 21. The liquid flows into the container part 1 from the container-part inflow port 10, and then reaches the inflow water passage 13.

Thereafter, the liquid passes through the first electrode guide inflow ports 30a and 31a, and flows into the first electrode 40. After the liquid passes through the first electrode guide inflow port 30a, and flows into the first electrode 40, the liquid passes through the first separator 50, and flows into the second electrode 41. Thereafter, the liquid flows through the outflow water passage 14 from the second electrode guide outflow port 60a, and is then caused to flow out from the container-part outflow port 11. After the liquid passes through the first electrode guide inflow port 31a, and flows into the first electrode 40, the liquid passes through the second separator 51, and flows into the second electrode 41. Thereafter, the liquid flows through the outflow water passage 14 from the second electrode guide outflow port 61a, and is then caused to flow out to the outside from the container-part outflow port 11.

As described above, according to the ion removal device 200 of Embodiment 2, liquid to be treated passes through the first electrode 40, which is held by the first electrode guide 30, the first separator 50, and the second electrode 41, which is held by the second electrode guide 60, in this order in the container part 1. Further, liquid to be treated passes through the first electrode 40, which is held by the first electrode guide 31, the second separator 51, and the second electrode 41, which is held by the second electrode guide 61, in this order in the container part 1. In the ion removal device 200, it is possible to cause the liquid to come into contact with the first electrode 40 and the second electrode 41 in each of the first layer and the second layer. Consequently, in the case in which the ion removal device 200 includes a plurality of first electrodes 40 and a plurality of second electrodes 41, it is possible to cause liquid to come into contact with all electrodes and hence, ion removal performance can be enhanced.

The electrode layers A1 and A2 in Embodiment 2 are not limited to two layers, and three or more layers may be adopted. In the case in which the electrode layers A1 and A2 have n layers, [the first current collector 20], [the first electrode guide 30/the first separator 50/the second electrode guide 60/the third current collector 22], ..., (n-1) [the first electrode guide 30/the first separator 50/the second electrode guide 60], and [the second current collector 21] are laminated in this order from the bottom surface of the container part 1. The first electrode 40 is disposed at each first electrode guide 30, and the second electrode 41 is disposed at each second electrode guide 60.

Although the ion removal devices 100 and 200 have been described with reference to embodiments heretofore, the ion removal devices 100 and 200 are not limited to the configurations of Embodiments described above. The above-mentioned configurations of the ion removal devices 100 and 200 are merely examples, and other constitutional elements may be included, or some constitutional elements may be omitted. In short, the ion removal devices 100 and 200 include variations to which design changes or applications are normally added by those who are skilled in the art, without departing from the technical concept.

### List of Reference Signs

1: container part,
3: first electrode guide,
5: separator,
6: second electrode guide,
7: lid,
8: pushing part,
10: container-part inflow port,
11: container-part outflow port,
12: first threaded part,
13, 13a, 13b: inflow water passage,
14, 14a, 14b: outflow water passage,
20: first current collector,
21: second current collector,
22: third current collector,
22a: inflow-side water passage,
22b: outflow-side water passage,
30, 31: first electrode guide,
30a, 31a: first electrode guide inflow port,
30b, 31b: first electrode holding part,
30c, 31c: first-electrode-guide-inflow-water-passage groove,
30d, 31d: first-electrode-guide-water-passage groove,
40: first electrode,
41: second electrode,
50: first separator,
51: second separator,
60, 61: second electrode guide,
60a, 61a: second electrode guide outflow port,
60b, 61b: second electrode holding part,
60c, 61c: second-electrode-guide-outflow-water-passage groove,
60d, 61d: second-electrode-guide-water-passage groove,
70: second threaded part,
90: first terminal part,
91: second terminal part,
100, 200: ion removal device,
A1, A2: electrode layer.

## Claims

1. An ion removal device that performs a desalination treatment on liquid, the ion removal device comprising:
a container part;
a first electrode configured to adsorb ions in the liquid;
a first electrode guide including a first electrode holding part and a first electrode guide inflow port, the first electrode holding part being configured to hold the first electrode, the liquid being caused to flow into the first electrode holding part through the first electrode guide inflow port;
a second electrode configured to adsorb ions in the liquid;
a second electrode guide including a second electrode holding part and a second electrode guide outflow port, the second electrode holding part being configured to hold the second electrode, the liquid being caused to flow out from the second electrode holding part through the second electrode guide outflow port; and
a separator having electrical insulating property and liquid permeability that allows the liquid to permeate through the separator, the separator being disposed between the first electrode and the second electrode, wherein
in the container part, the first electrode guide, the separator, and the second electrode guide are disposed such that the liquid to be treated passes through the first electrode guide, the separator, and the second electrode guide in this order.

2. The ion removal device of claim 1, wherein
the container part has an opening port formed at one end side thereof, thus having a bottomed cylindrical shape, and
the ion removal device further comprises:
a lid configured to close the opening port of the container part; and
a pushing part configured to push the first electrode and the second electrode due to attaching the lid to the container part.

3. The ion removal device of claim 2, wherein the pushing part is configured to be integrally formed with the lid.

4. The ion removal device of any one of claims 1 to 3, further comprising:
a first current collector that is in contact with the first electrode;
a second current collector that is in contact with the second electrode;
a first terminal part connected to the first current collector, the first terminal part being configured to supply electricity to the first current collector; and
a second terminal part connected to the second current collector, the second terminal part being configured to supply electricity to the second current collector.

5. The ion removal device of any one of claims 1 to 4, wherein
a first-electrode-guide-inflow-water-passage groove is formed on an outer surface of the first electrode guide, the first-electrode-guide-inflow-water-passage groove being connected to the first electrode guide inflow port,
a second-electrode-guide-outflow-water-passage groove is formed on an outer surface of the second electrode guide, the second-electrode-guide-outflow-water-passage groove being connected to the second electrode guide outflow port,
the first-electrode-guide-inflow-water-passage groove and the first electrode guide inflow port form an inflow water passage through which the liquid flows into the first electrode, and
the second-electrode-guide-outflow-water-passage groove and the second electrode guide outflow port form an outflow water passage through which the liquid flows out from the second electrode.

6. The ion removal device of claim 5, wherein
a first-electrode-guide-water-passage groove is formed on the outer surface of the first electrode guide at a position that is different from a position of the first-electrode-guide-inflow-water-passage groove,
a second-electrode-guide-water-passage groove is formed on the outer surface of the second electrode guide at a position that is different from a position of the second-electrode-guide-outflow-water-passage groove,
the first-electrode-guide-water-passage groove is connected to the second-electrode-guide-outflow-water-passage groove to form the outflow water passage, and
the second-electrode-guide-water-passage groove is connected to the first-electrode-guide-inflow-water-passage groove to form the inflow water passage.

7. The ion removal device of claim 5 or 6, wherein
the container part has a container-part inflow port and a container-part outflow port, the liquid flowing into the container part through the container-part inflow port, the liquid that flows into the container part through the container-part inflow port being caused to flow out to an outside of the container part through the container-part outflow port,
the container-part inflow port is provided at a position that is aligned with a position of the inflow water passage, and
the container-part outflow port is provided at a position that is aligned with a position of the outflow water passage.

8. The ion removal device of any one of claims 1 to 6, wherein
the container part has a container-part inflow port and a container-part outflow port, the liquid flowing into the container part through the container-part inflow port, the liquid that flows into the container part through the container-part inflow port being caused to flow out to an outside of the container part through the container-part outflow port,
the container-part inflow port is provided at a position that is aligned with a position of the first electrode guide inflow port, and
the container-part outflow port is provided at a position that is aligned with a position of the second electrode guide outflow port.

9. The ion removal device of any one of claims 5 to 7, wherein
the first electrode, the first electrode guide, the second electrode, the second electrode guide, and the separator form an electrode layer, a plurality of electrode layers are provided in the container part in a laminated manner, and a third current collector is disposed between adjacent electrode layers of the plurality of electrode layers, and
the third current collector has an inflow-side water passage and an outflow-side water passage, the inflow-side water passage causing the inflow water passage in one electrode layer of the adjacent electrode layers to communicate with the inflow water passage in an other electrode layer of the adjacent electrode layers, the outflow-side water passage causing the outflow water passage in the one electrode layer of the adjacent electrode layers to communicate with the outflow water passage in the other electrode layer of the adjacent electrode layers.
